(19) Europäisches Patentamt / European Patent Office / Office européen des brevets

(11) **EP 4 109 900 A1**

(12) **DEMANDE DE BREVET EUROPEEN**

(43) Date de publication:
**28.12.2022 Bulletin 2022/52**

(21) Numéro de dépôt: **22180078.2**

(22) Date de dépôt: **21.06.2022**

(51) Classification Internationale des Brevets (IPC):
**H04N 19/33** (2014.01)   **H04N 19/59** (2014.01)

(52) Classification Coopérative des Brevets (CPC):
**H04N 19/33; H04N 19/59**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**KH MA MD TN**

(30) Priorité: **25.06.2021 FR 2106859**

(71) Demandeur: **Fondation B Com**
**35510 Cesson Sevigne (FR)**

(72) Inventeurs:
• **BONNINEAU, Charles**
  **35700 RENNES (FR)**
• **HAMIDOUCHE, Wassim**
  **35235 THORIGNÉ-FOUILLARD (FR)**
• **AUBIE, Jean-Yves**
  **35520 MELESSE (FR)**

(74) Mandataire: **Jacobacci Coralis Harle**
**32, rue de l'Arcade**
**75008 Paris (FR)**

(54) **PROCÉDÉS DE DÉCODAGE ET DE CODAGE D'UNE IMAGE, DISPOSITIFS ET SIGNAL ASSOCIÉS**

(57) L'invention concerne un procédé de décodage d'une image à partir d'une couche de base ($C_{base}$) et d'informations d'amélioration (Iam), ledit procédé comprenant les étapes suivantes :
- décodage de ladite une couche de base ($C_{base}$) afin d'obtenir au moins une composante de base ($Y_{decbase}$, $U_{decbase}$, $V_{decbase}$),
- suréchantillonnage de la au moins une composante de base ($Y_{decbase}$, $U_{decbase}$, $V_{decbase}$) afin d'obtenir au moins une composante suréchantillonnée ($Y_{surech}$, $U_{surech}$, $V_{surech}$),
- décodage des informations d'amélioration ($I_{am}$) au moyen d'une partie au moins de réseau de neurones artificiels (B) afin d'obtenir des valeurs d'amélioration ($V_{am}$),
- reconstruction de l'image à partir de la au moins une composante suréchantillonnée ($Y_{surech}$, $U_{surech}$, $V_{surech}$) et des valeurs d'amélioration ($V_{am}$).

L'invention porte également sur un procédé de codage, un dispositif électronique de décodage, un dispositif électronique de codage et un signal associés.

Fig.2

EP 4 109 900 A1

**Description**

Domaine technique de l'invention

La présente invention concerne le domaine technique du décodage et du codage de contenus audiovisuels.
Elle concerne en particulier des procédés de décodage et de codage d'une image, ainsi que des dispositifs et un signal associés.

Etat de la technique

Afin d'améliorer la qualité d'expérience des utilisateurs, les contenus audiovisuels sont constamment enrichis. On peut par exemple recenser les contenus à ultra haute définition (UHD 4K), les contenus à plage dynamique étendue (HDR), ou encore les contenus vidéo à fréquences d'images élevées. Ces contenus contiennent un grand volume de données qu'il est souvent nécessaire pour un fournisseur de compresser avant de les transmettre vers les utilisateurs finaux.
La technique d'adaptation spatiale de résolution consiste à sous-échantillonner un contenu audiovisuel avant de le compresser, puis à remettre à l'échelle le contenu décompressé et utiliser des techniques d'amélioration de qualité telles que des méthodes de super-résolution pour reconstruire le contenu audiovisuel initial.
Cependant, l'utilisation de cette technique laisse subsister une perte d'informations et de détails due au sous-échantillonnage et à la quantification lors de la compression.
Ainsi se pose la problématique d'amélioration de la qualité de l'image lors de l'utilisation de la technique d'adaptation spatiale.
Il a été proposé dans l'article « A Hybrid Layered Image Compressor with Deep-Learning Technique », de Lee, W. C., Chang, C. P., Peng, W. H., & Hang, H. M., 2020 IEEE 22nd International Workshop on Multimedia Signal Processing (MMSP) (pp. 1-6) de compresser des données d'amélioration d'une image par l'application à une couche d'amélioration de l'image d'un réseau de neurones artificiels utilisant des modules d'attention spatiale (« spatial attention modules ») guidés par une couche de base de l'image. Toutefois, la technique proposée dans cet article n'envisage pas l'application d'une adaptation spatiale de la couche de base et n'offre ainsi pas de scalabilité spatiale.

Présentation de l'invention

Dans ce contexte, la présente invention propose un procédé de décodage d'une image à partir d'une couche de base et d'informations d'amélioration, ledit procédé comprenant les étapes suivantes :

- décodage de ladite une couche de base afin d'obtenir au moins une composante de base,
- suréchantillonnage de la au moins une composante de base afin d'obtenir au moins une composante suréchantillonnée,
- décodage des informations d'amélioration au moyen d'une partie au moins de réseau de neurones artificiels afin d'obtenir des valeurs d'amélioration,
- reconstruction de l'image à partir de la au moins une composante suréchantillonnée et des valeurs d'amélioration.

On reconstruit ainsi l'image sur la base de la couche de base (qui pourrait être utilisée seule pour reconstruire une image de qualité inférieure) et d'informations d'amélioration dont le décodage au moyen du réseau de neurones artificiels est particulièrement efficace.
La composante de base est par exemple l'une des composantes colorimétriques de l'image, par exemple dans le système de codage colorimétrique YUV ou le système de codage colorimétrique RGB.
D'autres caractéristiques avantageuses et non limitatives du procédé conforme à l'invention, prises individuellement ou selon toutes les combinaisons techniquement possibles, sont les suivantes :

- l'étape de reconstruction de l'image comprend une application de la au moins une composante suréchantillonnée et des valeurs d'amélioration à une autre partie de réseau de neurones artificiels ;
- l'étape de reconstruction de l'image comprend au moins une somme pixel à pixel entre la au moins une composante suréchantillonnée et au moins un sous-ensemble des valeurs d'amélioration ;
- le procédé de décodage comprend une étape d'obtention de paramètres représentatifs d'un modèle entropique, et le décodage des informations d'amélioration comprend :

  - une première étape de décodage entropique utilisant les paramètres représentatifs du modèle entropique,
  - une deuxième étape de décodage au moyen de la partie de réseau de neurones artificiels ;

- les paramètres représentatifs du modèle entropique sont obtenus au moyen d'une partie supplémentaire de réseau de neurones artificiels.

L'invention prévoit également un procédé de codage d'une image à partir d'au moins une composante de ladite image, le procédé comprenant les étapes suivantes :

- obtention d'au moins une composante de base à partir de la au moins une composante de ladite image au moyen d'un processus de codage,
- suréchantillonnage de la au moins une composante de base afin d'obtenir au moins une composante suréchantillonnée,
- obtention d'informations d'amélioration par codage au moyen d'une partie au moins de réseau de neurones artificiels et à partir de la au moins une composante de l'image et de la au moins une composante suréchantillonnée.

La au moins une composante de base présente par exemple une résolution inférieure à celle de la au moins une composante de l'image.

Préférentiellement, l'étape d'obtention de la au moins une composante de base comprend les sous-étapes suivantes :

- sous-échantillonnage de la au moins une composante de ladite image afin d'obtenir au moins une composante intermédiaire,
- codage de la au moins une composante intermédiaire afin d'obtenir une couche de base,
- décodage de la couche de base afin d'obtenir la au moins une composante de base.

Selon une possibilité de réalisation, la partie au moins de réseau de neurones artificiels reçoit, d'une part, la au moins une composante suréchantillonnée et, d'autre part, la au moins une composante de l'image.

Selon une possibilité de réalisation, le procédé de codage comprend avant l'étape d'obtention d'informations d'amélioration, au moins une différence pixel à pixel entre la au moins une composante de l'image et la au moins une composante suréchantillonnée. Cette différence pixel à pixel correspond à un calcul de résidu entre la au moins une composante de l'image et la au moins une composante suréchantillonnée.

L'invention porte également sur un dispositif de décodage d'une image à partir d'une couche de base et d'informations d'amélioration comprenant :

- une première unité de décodage conçue pour obtenir au moins une composante de base par décodage de la couche de base,
- une unité de suréchantillonnage conçue pour obtenir au moins une composante suréchantillonnée par suréchantillonnage de la au moins une composante de base,
- une deuxième unité de décodage conçue pour obtenir des valeurs d'amélioration par décodage des informations d'amélioration au moyen d'une partie au moins de réseau de neurones artificiels,
- une unité de reconstruction conçue pour reconstruire ladite image à partir de la au moins une composante suréchantillonnée et des valeurs d'amélioration.

Selon une possibilité de réalisation, l'unité de reconstruction est conçue pour reconstruire ladite image par application de la au moins une composante suréchantillonnée et des valeurs d'amélioration à une autre partie de réseau de neurones artificiels.

Selon une possibilité de réalisation, l'unité de reconstruction est conçue pour reconstruire ladite image à partir d'au moins une somme pixel à pixel entre la au moins une composante suréchantillonnée et au moins un sous-ensemble des valeurs d'amélioration.

L'invention porte également sur un dispositif de codage d'une image à partir d'au moins une composante de l'image comprenant :

- une unité d'obtention d'au moins une composante de base à partir de la au moins une composante de l'image,
- une unité de suréchantillonnage conçue pour obtenir au moins une composante suréchantillonnée par suréchantillonnage de la au moins une composante de base,
- une unité de codage conçue pour obtenir des informations d'amélioration par codage au moyen d'une partie au moins de réseau de neurones artificiels à partir de la au moins une composante de l'image et de la au moins une composante suréchantillonnée.

L'unité d'obtention peut comprendre :

- un module de sous-échantillonnage conçu pour sous-échantillonner la au moins une composante de l'image, afin d'obtenir au moins une composante intermédiaire,
- un module de codage conçu pour coder la au moins une composante intermédiaire, afin d'obtenir une couche de base,
- un module de décodage conçu pour décoder ladite couche de base, afin d'obtenir ladite au moins une composante de base.

L'invention porte également sur un signal représentatif d'au moins une composante d'une image, comprenant une couche de base et des informations d'amélioration, lesdites informations d'amélioration étant obtenues à partir de la au moins une composante de l'image et d'au moins une composante suréchantillonnée.

Description détaillée de l'invention

De plus, diverses autres caractéristiques de l'invention ressortent de la description annexée effectuée en référence aux dessins qui illustrent des formes, non limitatives, de réalisation de l'invention et où :

- la figure 1 représente un dispositif électronique de codage utilisé dans le cadre de l'invention ;
- la figure 2 représente un dispositif électronique de décodage utilisé dans le cadre de l'invention ;
- la figure 3 représente schématiquement une portion de réseau de neurones artificiels utilisée par le dispositif électronique de codage de la figure 1 ;
- la figure 4 est un schéma-bloc d'une phase d'apprentissage d'un ensemble utilisée dans le cadre de l'invention ;
- la figure 5 est un logigramme représentant des étapes d'un procédé de codage mis en oeuvre au sein du dispositif électronique de codage de la figure 1 ;
- la figure 6 illustre schématiquement une première variante du procédé de codage mis en oeuvre au sein du dispositif électronique de codage de la figure 1 ;
- la figure 7 illustre schématiquement une deuxième variante du procédé de codage mis en oeuvre au sein du dispositif électronique de codage de la figure 1 ;
- la figure 8 est un logigramme représentant des étapes d'une première variante d'un procédé de décodage mis en oeuvre au sein du dispositif électronique de décodage de la figure 2 ;
- la figure 9 illustre schématiquement une première variante du procédé de décodage mis en oeuvre au sein du dispositif électronique de décodage de la figure 2;
- la figure 10 est un logigramme représentant des étapes d'une deuxième variante du procédé de décodage mis en oeuvre au sein du dispositif électronique de décodage de la figure 2 ;
- la figure 11 présente une comparaison de performances de codage obtenues selon plusieurs techniques incluant deux techniques obtenues par les procédés de codage et de décodage selon l'invention ;
- la figure 12 est un logigramme représentant des étapes d'une autre variante du procédé de décodage mis en oeuvre au sein du dispositif électronique de décodage de la figure 2.

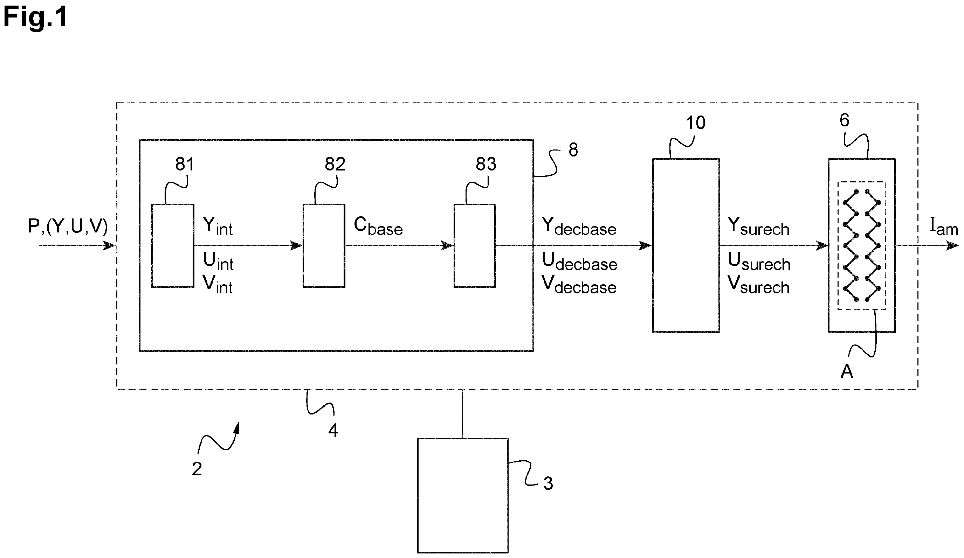

La figure 1 représente un dispositif électronique de codage 2 utilisant une partie A de réseau de neurones artificiels.

Le dispositif électronique de codage 2 est configuré pour compresser au moins une composante d'une image. L'image peut être une image parmi une séquence d'images à compresser. Ici, le dispositif électronique de codage 2 est configuré pour compresser trois composantes colorimétriques de l'image, composantes définies dans un système de codage colorimétrique donné. Par exemple, le système de codage colorimétrique peut être le système de codage YUV, ou encore le système de codage RGB, ou encore le système de codage XYZ. Dans la suite, on considère que le système de codage colorimétrique auquel appartiennent les trois composantes colorimétriques de l'image est le système de codage YUV, mais l'invention pourrait s'appliquer à d'autres systèmes de codage colorimétriques, tels que RGB ou XYZ. Il y a dans ce cas une composante de luminance Y, une première composante de chrominance U et/ou une deuxième composante de chrominance V.

Le dispositif électronique de codage 2 comprend une unité de codage 6, une unité d'obtention 8 de trois composantes de base à partir des composantes de l'image, et une unité de suréchantillonnage 10.

Comme schématiquement représenté à la figure 1, l'unité de codage 6, l'unité d'obtention 8 et l'unité de suréchantillonnage 10 sont ici mises en oeuvre par un processeur 4 (par exemple un microprocesseur). En variante de l'utilisation du processeur 4, tout autre type de circuit intégré peut être utilisé, par exemple de type ASIC ou FPGA.

Le dispositif électronique de codage 2 comprend également une unité de mémorisation 3, par exemple une mémoire (éventuellement une mémoire non-volatile réinscriptible) ou un disque dur. Bien que l'unité de mémorisation 3 soit représentée en figure 1 comme un élément distinct du processeur 4, l'unité de mémorisation 3 pourrait en variante être intégrée au (c'est-à-dire comprise dans le) processeur 4.

Le processeur 4 est dans ce cas conçu pour exécuter successivement une pluralité d'instructions d'un programme d'ordinateur mémorisé par exemple dans l'unité de mémorisation 3.

L'unité d'obtention 8 de trois composantes de base (Ydecbase, Udecbase, Vdecbase) à partir des trois composantes de l'image comprend un module de sous-échantillonnage 81, un module de codage 82 et un module de décodage 83.

Comme schématiquement représenté en figure 1, le processeur 4 du dispositif électronique de codage 2 reçoit des données P et Binit représentant au moins une image I à compresser. Plus précisément, les données P sont des données de format et les données Binit sont des données de contenu initial.

Les données de format P indiquent des caractéristiques du format de représentation de l'image I, par exemple les dimensions (en pixels) de l'image I, la profondeur en bits des informations de luminance et/ou la profondeur en bits des informations de chrominance, ou dans le cas où l'image I est une image d'une séquence d'images, la fréquence d'image.

Les données de format P comprennent en outre des informations relatives à un facteur de sous-échantillonnage. Ce facteur de sous-échantillonnage caractérise le sous-échantillonnage effectué sur l'image I à traiter dans le cadre de l'application d'une technique d'adaptation spatiale de résolution.

Les données de contenu Binit forment une représentation (ici non compressée) des composantes (Y, U, V) de l'image I à compresser. Par exemple, les données de contenu comprennent, pour chaque pixel de la composante C de l'image I à compresser, des données représentant une valeur de luminance du pixel et/ou des données représentant des valeurs de chrominance du pixel.

Le module de sous-échantillonnage 81 est conçu pour sous-échantillonner les données Binit en utilisant les informations relatives au facteur de sous-échantillonnage des données de format P.

Par exemple, les informations relatives au facteur de sous-échantillonnage peuvent indiquer un sous-échantillonnage de toutes les composantes colorimétriques de l'image, dans un format donné tel YUV444 ou YUV420, depuis une résolution 8K vers une résolution 4K, ou depuis une résolution 4K vers une résolution HD.

Dans un autre exemple envisageable, les informations relatives au facteur de sous-échantillonnage peuvent indiquer que les données Binit ont pour format le format YUV444 et doivent être sous échantillonnées au format YUV420.

Le module de sous-échantillonnage 81 produit ainsi, du fait du sous-échantillonnage, trois composantes intermédiaires ($Y_{int}$, $U_{int}$, $V_{int}$).

Le module de codage 82 est conçu pour recevoir, du module de sous-échantillonnage 81, trois composantes intermédiaires ($Y_{int}$, $U_{int}$, Vint) et pour coder les trois composantes intermédiaires ($Y_{int}$, $U_{int}$, Vint). Toute technique de codage à couche simple, telle que le codage selon la norme WC, peut être utilisée par le module de codage 82. Suite au codage, une couche de base $C_{base}$ est obtenue. La couche de base contient des données compressées représentant les trois composantes intermédiaires ($Y_{int}$, $U_{int}$, $V_{int}$).

Le module de décodage 83 est conçu pour recevoir, du module de codage 82, la couche de base $C_{base}$ et décoder la couche de base $C_{base}$. Toute technique de décodage à couche simple, telle que le décodage selon la norme WC, peut être utilisée. Suite au décodage, trois composantes de base (Ydecbase, $U_{decbase}$, $V_{decbase}$) sont obtenues.

L'unité de suréchantillonnage 10 est conçue pour recevoir, du module de décodage 83, les trois composantes de base ($Y_{decbase}$, $U_{decbase}$, $V_{decbase}$), et pour suréchantillonner les trois composantes de base ($Y_{decbase}$, $U_{decbase}$, $V_{decbase}$) en utilisant les informations relatives au facteur de sous-échantillonnage des données de format P.

Par exemple, si les informations relatives au facteur de sous-échantillonnage indiquent un sous-échantillonnage depuis une résolution 8K vers une résolution 4K, l'unité de suréchantillonnage 10 suréchantillonne depuis une résolution 4K vers une résolution 8K. Si les informations relatives au facteur de sous-échantillonnage indiquent un sous-échantillonnage depuis une résolution 4K vers une résolution HD, l'unité de suréchantillonnage 10 suréchantillonne depuis une résolution HD vers une résolution 4K. Si les informations relatives au facteur de sous-échantillonnage indiquent un sous-échantillonnage depuis le format YUV444 vers le format YUV420, l'unité de suréchantillonnage 10 suréchantillonne depuis le format YUV420 vers le format YUV444. Suite au suréchantillonnage, trois composantes suréchantillonnées ($Y_{surech}$, $U_{surech}$, $V_{surech}$) sont obtenues. Les trois composantes suréchantillonnées ($Y_{surech}$, $U_{surech}$, $V_{surech}$) forment des données de contenu suréchantillonné Bsurech. Par ailleurs, les trois composantes suréchantillonnées ($Y_{surech}$, $U_{surech}$, $V_{surech}$) présentent la même résolution que les composantes (Y, U, V) de l'image I à compresser.

L'opération de suréchantillonnage peut être effectuée par l'unité de suréchantillonnage 10 en utilisant un algorithme de suréchantillonnage, par exemple traditionnel ou, en variante, basé sur un réseau de neurones convolutifs. On se référera aux articles « Lanczos filtering in one and two dimensions » de Duchon, C.E. dans Journal of Applied Meteorology and Climatology, 18(8) (1979), 1016-1022, et « Enhanced deep residual networks for single image super-resolution », de Lim, B. et al. dans Proceedings of the IEEE conference on computer vision and pattern recognition workshops (2017) pp. 136-144, pour un exemple de description de tels algorithmes. L'unité de codage 6 est conçue pour mettre en oeuvre une partie A de réseau de neurones artificiels après avoir été configurée par le processeur 4.

Comme expliqué dans la suite, la partie A de réseau de neurones artificiels est utilisée dans le cadre d'un traitement des données de contenu Binit et des données de contenu suréchantillonné Bsurech visant à obtenir des informations d'amélioration $I_{am}$. Ces informations d'amélioration $I_{am}$ sont des données compressées.

Par exemple la partie A de réseau de neurones artificiels est une partie de réseau de neurones convolutifs comprenant une alternance de couches de convolution et de couches de normalisation. On pourra se référer à l'article «Joint Autoregressive and Hierarchical Priors for Learned Image Compression », de Minnen et al. dans NIPS'18: Proceedings of the 32nd International Conference on Neural Information Processing Systems, Dec. 2018 p. 10794-10803, pour une description détaillée de cette partie de réseau.

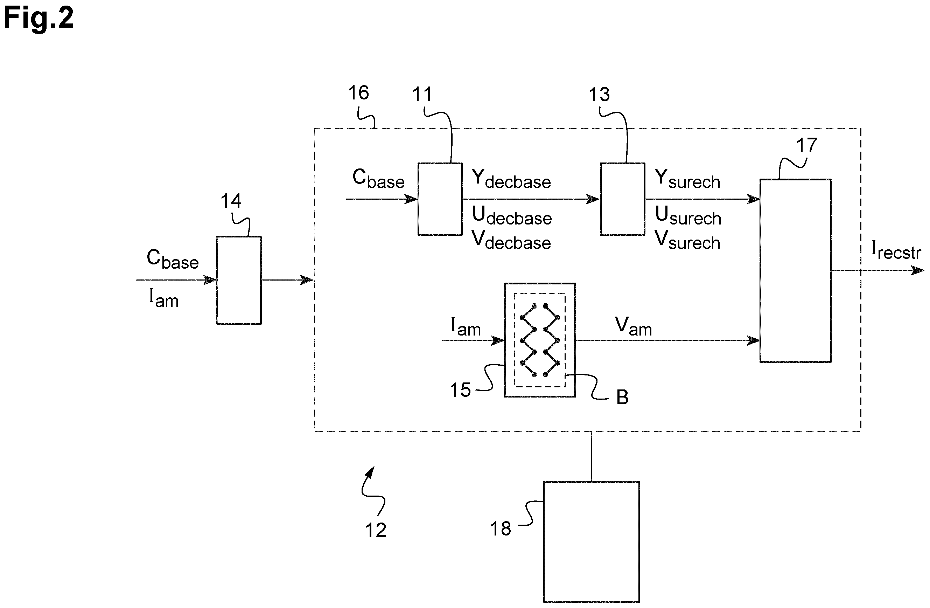

Les informations d'amélioration $I_{am}$ sont destinées à un dispositif de décodage (par exemple le dispositif de décodage 12 décrit ci-dessous en référence à la figure 2).

La figure 2 représente un dispositif électronique de décodage 12 selon l'invention et utilisant une partie B de réseau de neurones artificiels. La partie B de réseau de neurones artificiels est par exemple une partie de réseau de neurones convolutifs consistant en une alternance de couches de convolution et de couches de normalisation. On pourra se référer à l'article «Joint Autoregressive and Hierarchical Priors for Learned Image Compression » de Minnen et al. dans NIPS'18: Proceedings of the 32nd International Conference on Neural Information Processing Systems, Dec. 2018 p. 10794-10803 pour une description détaillée de cette partie de réseau.

Ce dispositif électronique de décodage 12 comprend une unité de réception 14 et un processeur 16 (par exemple un microprocesseur). En variante du processeur 16, tout autre type de circuit intégré peut être utilisé, par exemple de type ASIC ou FPGA.

L'unité de réception 14 est par exemple un circuit de communication (tel qu'un circuit de communication radiofréquence) et permet de recevoir des données (et notamment ici des données codées) d'un dispositif électronique extérieur, tel que le dispositif électronique de codage 2, et de communiquer ces données au processeur 16 (auquel l'unité de réception 14 est par exemple reliée par un bus).

Dans le mode de réalisation décrit ici, les données reçues par l'unité de réception 14 consistent en un signal représentatif de trois composantes d'une image I, comprenant d'une part une couche de base $C_{base}$, telle que celle obtenue par le module de codage 82 du dispositif électronique de codage 2 précédemment décrit, et d'autre part et des informations d'amélioration $I_{am}$, telles que celles obtenues par le traitement, par le dispositif électronique de codage 2 décrit plus haut. Les données reçues par l'unité de réception 14 comportent également les données de format P précédemment décrites, éventuellement reformatées pour pouvoir être lues par le dispositif électronique de décodage 12 selon l'invention. L'unité de réception 14 communique la couche de base $C_{base}$ et les données de format P au processeur 16.

Le dispositif électronique de décodage 12 comprend également une unité de mémorisation 18, par exemple une mémoire (éventuellement une mémoire non-volatile réinscriptible) ou un disque dur. Bien que l'unité de mémorisation 18 soit représentée en figure 2 comme un élément distinct du processeur 16, l'unité de mémorisation 18 pourrait en variante être intégrée au (c'est-à-dire comprise dans le) processeur 16.

Le processeur 16 est dans ce cas conçu pour exécuter successivement une pluralité d'instructions d'un programme d'ordinateur mémorisé par exemple dans l'unité de mémorisation 18.

Le dispositif électronique de décodage 12 comprend en outre une première unité de décodage 11, une unité de suréchantillonnage 13, une deuxième unité de décodage 15 et une unité de reconstruction 17.

Comme schématiquement représenté à la figure 2, la première unité de décodage 11, l'unité de suréchantillonnage 13, la deuxième unité de décodage 15 et l'unité de reconstruction sont mises en oeuvre par le processeur 16. Comme précédemment indiqué, tout type de circuit intégré autre que le processeur 16, tel que de type ASIC ou FPGA peut être utilisé.

La première unité de décodage 11 est conçue pour recevoir la couche de base $C_{base}$, et pour décoder la couche de base $C_{base}$ en trois composantes de base ($Y_{decbase}$, $U_{decbase}$, $V_{decbase}$). Par exemple, la première unité de décodage 11 peut utiliser un module de décodage compatible avec la norme VVC.

L'unité de suréchantillonnage 13 est conçue pour recevoir, d'une part de la première unité de décodage 11 les trois composantes de base ($Y_{decbase}$, $U_{decbase}$, $V_{decbase}$) et d'autre part du processeur 16 les informations relatives au facteur de sous-échantillonnage des données de format P, afin de suréchantillonner les trois composantes de base (Ydecbase, $U_{decbase}$, Vdecbase). L'unité de suréchantillonnage 13 est conçue pour produire, du fait du suréchantillonnage, trois composantes suréchantillonnées ($Y_{surech}$, $U_{surech}$, $V_{surech}$).

La deuxième unité de décodage 15 est conçue pour mettre en oeuvre la partie B de réseau de neurones artificiels après avoir été configurée par le processeur 16.

La deuxième unité de décodage 15 est en particulier conçue pour recevoir du processeur les informations d'amélioration $I_{am}$, et décoder ces informations d'amélioration $I_{am}$ au moyen de la partie B de réseau de neurones artificiels. Suite à ce décodage, des valeurs d'amélioration $V_{am}$ sont obtenues.

L'unité de reconstruction 17 reçoit la au moins une composante suréchantillonnée ($Y_{surech}$, $U_{surech}$, $V_{surech}$) et les valeurs d'amélioration $V_{am}$ afin d'obtenir une image reconstruite Irecstr (qui sera ainsi proche de l'image initiale I).

L'ensemble formé par la partie A de réseau de neurones artificiels du dispositif électronique de codage 2 et par la partie B de réseau de neurones artificiels du dispositif électronique de décodage 12 (la sortie de la partie A de réseau de neurones artificiels étant appliquée à l'entrée de la partie B de réseau de neurones artificiels) constitue par exemple un auto-encodeur.

Dans ce cas, une architecture telle que décrite dans l'article « Joint Autoregressive and Hierarchical Priors for Learned Image Compression » de Minnen et al. dans NIPS'18: Proceedings of the 32nd International Conference on Neural Information Processing Systems, Dec. 2018 p. 10794-10803 peut être utilisée.

Préalablement à l'utilisation du dispositif électronique de codage 2 pour la mise en oeuvre du procédé de codage selon l'invention qui va être décrit par la suite, et à l'utilisation du dispositif électronique de décodage 12 pour la mise en oeuvre du procédé de décodage selon l'invention qui va être décrit par la suite, une phase d'apprentissage de l'ensemble C formé par une portion de réseau de neurones artificiels G et une partie supplémentaire de réseau de neurones artificiels H est implémentée.

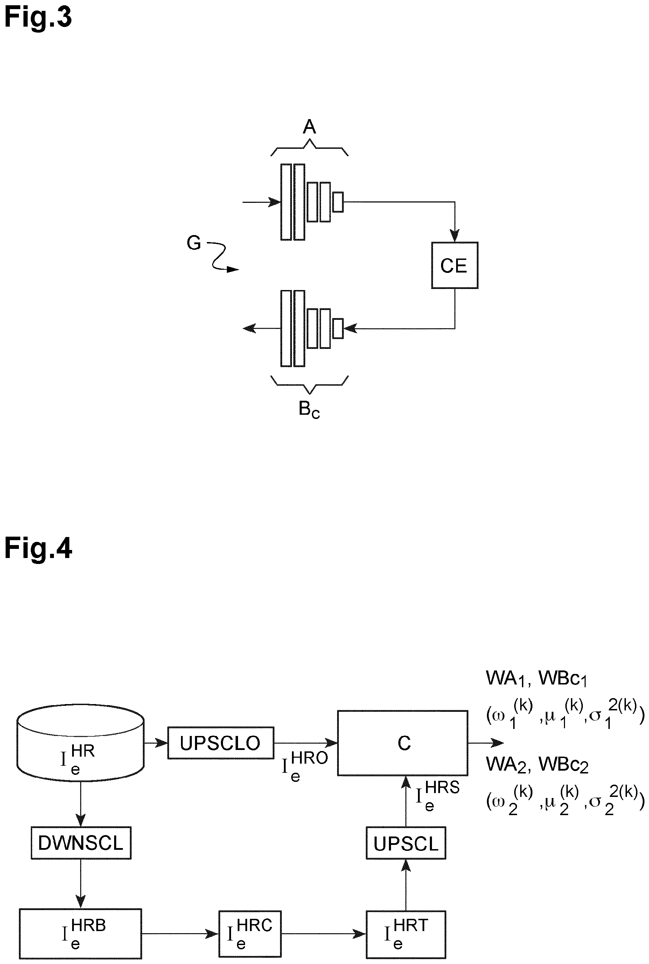

La portion de réseau de neurones artificiels G est formée par l'union de la partie A de réseau de neurones artificiels, d'une partie complémentaire Bc de réseaux de neurones artificiels, et d'un module de codage entropique CE intercalé entre la partie A de réseau de neurone artificiels et la partie complémentaire Bc de réseau de neurones artificiels. Cette portion de réseau de neurones artificiels G est illustrée à la figure 3.

La partie complémentaire Bc de réseau de neurones artificiels a une structure identique à la partie B de neurones artificiels du dispositif électronique de décodage 12 selon l'invention et est configurée pour décoder un signal codé par la partie A de réseau de neurones artificiels et le module de codage entropique CE décrit ci-après.

Le module de codage entropique CE est destiné à appliquer une compression par codage entropique au résultat de la compression de signal effectuée par la partie A de réseau de neurones artificiels afin d'améliorer le résultat de cette compression. Ici, le modèle entropique utilisé est un modèle de mélanges de K Gaussiennes, et défini par une probabilité

[Math 1]

$$p_{\hat{y}}(\hat{y}) \sim \sum_{k=1}^{K} \omega^{(k)} N(\mu^{(k)}, \sigma^{2(k)})$$

avec $\mu^{(k)}$ l'espérance de la k-ième Gaussienne et $\sigma^{2(k)}$ la variance de la k-ième Gaussienne.

La partie supplémentaire de réseau de neurones artificiels H est destinée à déterminer les paramètres du modèle entropique que sont les coefficients $\omega^{(k)}$, $\mu^{(k)}$ et $\sigma^{2(k)}$ du modèle entropique.

La phase d'apprentissage de l'ensemble C vise ainsi à déterminer les poids optimaux de la portion de réseau de neurones artificiels G et de la partie supplémentaire de réseau de neurones artificiels H. Aussi, par la détermination des poids optimaux de la partie supplémentaire de réseau de neurones artificiels H, les coefficients $\omega^{(k)}$, $\mu^{(k)}$ et $\sigma^{2(k)}$ du modèle d'entropie du module de codage entropique sont déterminées et injectées dans la portion de réseau de neurones artificiels G.

La phase d'apprentissage de l'ensemble C consiste à déterminer, par le traitement d'un ensemble d'images d'entraînement, ou de composantes d'images d'entraînement par l'ensemble C, les différents paramètres, poids et coefficients de cet ensemble C, en mettant en oeuvre par exemple un algorithme de rétropropagation du gradient.

On considère ici que pour une image d'entraînement $I_e^{HR}$, les trois composantes de l'image d'entraînement sont utilisées lors de la phase d'apprentissage. Ainsi, dans la description de la phase d'apprentissage qui va suivre, lorsque le terme « image d'entraînement $I_e^{HR}$ », ou « images d'entraînement de base $I_e^{HRB}$ », ou « images de base compressées $I_e^{HRC}$ », ou « images de base de test $I_e^{HRt}$ », ou « images de base suréchantillonnées $I_e^{HRs}$ », il faut comprendre l'ensemble des trois composantes de ces images.

Les images d'entraînement $I_e^{HR}$ sont des images haute résolution au format YUV420.

Un schéma bloc de la phase d'apprentissage est représenté à la figure 4.

Les images d'entraînement $I_e^{HR}$ sont sous-échantillonnées par un facteur 2 afin d'obtenir des images d'entraînement de base $I_e^{HRB}$. Puis, les images d'entraînement de base sont compressées en utilisant le logiciel VTM (plus précisément le modèle de test VVC), compatible avec la norme Versatile Video Coding (VVC), et en utilisant différentes valeurs de paramètres de quantification, afin de générer des images de base compressées $I_e^{HRC}$. Enfin, les images de base compressées $I_e^{HRC}$ sont décodées afin d'obtenir des images de base de test $I_e^{HRT}$.

Les images de base de test $I_e^{HRT}$ sont ensuite converties du format YUV420 vers le format YUV444 par duplication de leurs composantes de chrominance.

Après cette conversion, les images de base de test $I_e^{HRT}$ sont suréchantillonnées en utilisant un algorithme de suréchantillonnage, par exemple traditionnel ou basé sur un réseau de neurones convolutifs, pour obtenir des images de base suréchantillonnées $I_e^{HRs}$. On se référera aux articles « Lanczos filtering in one and two dimensions » de Duchon, C.E. dans Journal of Applied Meteorology and Climatology, 18(8) (1979), 1016-1022, et « Enhanced deep residual networks for single image super-resolution », de Lim, B. et al. dans Proceedings of the IEEE conference on computer vision and pattern recognition workshops (2017) pp. 136-144, pour une description de tels algorithmes.

Par ailleurs les images d'entraînement $I_e^{HR}$ sont également converties du format YUV420 vers le format YUV444 par duplication de leurs composantes de chrominance, pour générer des images d'entraînement originales $I_e^{HRo}$.

L'ensemble C est alors entraîné de la façon suivante, suivant deux variantes possibles.

La partie A de réseau de neurones artificiels reçoit en entrée un couple d'images CI ($I_e^{HRo}$, $I_e^{HRs}$) constitué d'une image d'entraînement originale $I_e^{HRo}$ et de l'image de base suréchantillonnée $I_e^{HRs}$ correspondante.

On décrit dans la suite deux variantes possibles qui seront appelées variante de codage conditionnel et variante de codage résiduel et qui seront expliquées plus loin.

Dans la variante de codage conditionnel, la partie A de réseau de neurones artificiels reçoit en entrée chacune des trois composantes de l'image d'entraînement originale $I_e^{HRo}$ et de l'image de base suréchantillonnée $I_e^{HRs}$ correspondante, c'est-à-dire au total 6 signaux. Il s'agit par exemple de la composante de luminance $Y_e^{HRo}$, de la première composante de chrominance $U_e^{HRo}$, et de la deuxième composante de chrominance $V_e^{HRo}$ d'une part, et d'autre part de la composante de luminance $Y_e^{HRs}$, de la première composante de chrominance $U_e^{HRs}$ et de la deuxième composante de chrominance $V_e^{HRs}$.

Dans la variante de codage résiduel, les différences pixel à pixel $\Delta_e^{YHR}$, entre la composante de luminance $Y_e^{HRo}$ et la composante de luminance $Y_e^{HRs}$, $\Delta U_e^{HR}$, entre la première composante de chrominance $U_e^{HRo}$ et la première composante de chrominance $U_e^{HRs}$, et $\Delta V_e^{HR}$, entre la deuxième composante de chrominance $V_e^{HRo}$ et la deuxième composante de chrominance $V_e^{HRs}$ sont calculées. La partie A de réseau de neurones artificiels reçoit en entrée les trois signaux $\Delta Y_e^{HR}$, $\Delta U_e^{HR}$ et $\Delta V_e^{HR}$. Chaque composante étant une matrice de pixels, on entend par différence pixel par pixel entre deux composantes la matrice constituée de pixels dont la valeur est égale à la différence des valeurs des pixels correspondants dans chacune des deux composantes.

Dans l'une ou l'autre de la variante de codage conditionnel et la variante de codage résiduel, un algorithme de rétropropagation du gradient est ensuite implémenté afin de minimiser, pour chaque couple d'images CI ($I_e^{HRo}$, $I_e^{HRs}$), la fonction de coût :

[Math 2]

$$L = R + \lambda D \left( I_e^{HRo}, \hat{I}_e^{HR} \right)$$

où

- D représente la distorsion entre l'image d'entraînement originale courante $I_e^{HRo}$ et une image $\widehat{I}_e^{HR}$ prédite calculée en fonction de l'image d'entraînement originale courante $I^{HR}$ et de l'image de base suréchantillonnée $I_e^{HRs}$. La distorsion D correspond par exemple à l'erreur quadratique moyenne entre les valeurs de pixels de l'image d'entraînement originale courante $I_e^{HRo}$ et les valeurs de pixels de l'image $\widehat{I}_e^{HR}$.

- R représente l'entropie du vecteur compressé latent, c'est-à-dire, après compression par la partie A de réseau de neurones artificiels, R étant défini par :

[Math 3]

$$R = -\log_2 p_{\hat{y}}(\hat{y})$$

où $p_{\hat{y}}(\hat{y})$ représente la probabilité du vecteur compressé latent en lien avec le modèle d'entropie choisi. Par exemple, comme déjà mentionné plus haut le modèle d'entropie choisi peut être un modèle de mélanges de K Gaussiennes, et dans ce cas

[Math 4]

$$p_{\hat{y}}(\hat{y}) \sim \sum_{k=1}^{K} \omega^{(k)} N\left(\mu^{(k)}, \sigma^{2(k)}\right)$$

avec $\mu^{(k)}$ l'espérance de la k-ième Gaussienne et $\sigma^{2(k)}$ la variance de la k-ième Gaussienne. Tout autre modèle d'entropie peut être utilisé, tel qu'un modèle à distribution Gaussienne ou un modèle à distribution Laplacienne.

- $\lambda$ représente un multiplicateur de Lagrange utilisé pour ajuster un compromis entre le débit et la distorsion de l'image.

On peut utiliser par exemple une technique dite de *"descente de gradient par mini-lots"* (ou *"mini-batch gradient*

*descent"*) telle que décrite dans l'article *"Large-scale machine learning with stochastic gradient descent"*, de L. Bottou, dans Proceedings of COMPSTAT'2010, Springer 2010, pp. 177-186.

Lors de la phase d'apprentissage, l'ensemble des couples CI ($I_e^{HRo}$, $I_e^{HRs}$) sont traités.

A chaque traitement d'un couple d'images CI ($I_e^{HRo}$, $I_e^{HRS}$) lors de la phase d'apprentissage, du bruit est ajouté au vecteur latent résultant de la compression par la partie A de réseau de neurones artificiels afin d'émuler le processus de quantification et de faciliter l'implémentation de l'algorithme de rétropropagation du gradient.

A la fin de la phase d'apprentissage, les paramètres suivants sont obtenus :

- les poids WA1 de la partie A de réseau de neurones artificiels dans le cas de la variante de codage conditionnel,
- les poids WBc1 de la partie complémentaire Bc de réseau de neurones artificiels dans le cas de la variante de codage conditionnel,
- les coefficients du modèle entropique ($\omega_1^{(k)}$, $\mu_1^{(k)}$, $\sigma_1^{2(k)}$) dans le cas de la variante de codage conditionnel,
- les poids WA2 de la partie A de réseau de neurones artificiels dans le cas de la variante de codage résiduel,
- les poids WBc2 de la partie complémentaire Bc de réseau de neurones artificiels dans le cas de la variante de codage résiduel,
- les coefficients du modèle entropique ($\omega_2^{(k)}$, $\mu_2^{(k)}$, $\sigma_2^{(k)}$) dans le cas de la variante de codage résiduel.

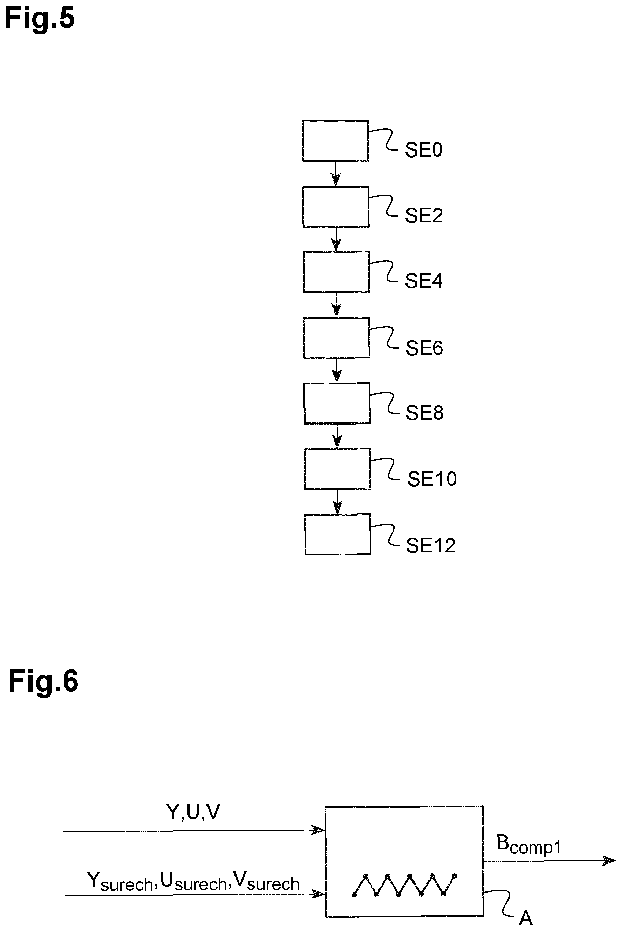

On décrit à présent en référence à la figure 5 un exemple de procédé de codage d'une image I à partir d'au moins une composante C de l'image I, mis en oeuvre par le dispositif électronique de codage 2.

L'unité de mémorisation 3 liée au processeur 4 mémorise par exemple des instructions de programme d'ordinateur conçues pour la mise en oeuvre d'une partie au moins des étapes du procédé de la figure 5 lorsque ces instructions sont exécutées par le processeur 4. Autrement dit, le processeur 4 est programmé pour mettre en oeuvre une partie au moins des étapes de la figure 5.

On se place ici dans le cas où la au moins une composante de l'image courante I est constituée de trois composantes, et plus particulièrement dans le cas où ces composantes correspondent à trois composantes colorimétriques de l'image I, à savoir la composante Y de luminance de l'image I, ainsi que la première composante de chrominance U et la deuxième composante de chrominance V de l'image I. Tout autre espace colorimétrique peut être utilisé dans le cadre de l'invention.

Lors d'une étape SE0, le processeur 4 reçoit la composante Y de luminance, la première composante de chrominance U et la deuxième composante de chrominance V constituant les données de contenu Binit, ainsi que des données de format P décrites précédemment.

Puis, le processeur 4 implémente une étape SE2 lors de laquelle l'unité d'obtention 8 d'au moins une composante de base en provenance du processeur reçoit la composante de luminance Y de l'image, la première composante de chrominance U, la deuxième composante de chrominance V, et les informations relatives à un facteur de sous-échantillonnage comprises dans les données de format P.

Puis le processeur implémente une étape SE4 lors de laquelle le module de sous-échantillonnage 81 sous-échantillonne la composante de luminance Y, la première composante de chrominance U et la deuxième composante de chrominance V de l'image I, afin de générer respectivement une composante de luminance intermédiaire $Y_{int}$, une première composante de chrominance intermédiaire $U_{int}$ et une deuxième composante de chrominance intermédiaire Vint. Pour cela, le module de sous-échantillonnage utilise les informations relatives à un facteur de sous-échantillonnage.

Par exemple, la composante de luminance Y, la première composante de chrominance U et la deuxième composante de chrominance V de l'image I ont une résolution 8K et la composante de luminance intermédiaire $Y_{int}$, la première composante de chrominance intermédiaire $U_{int}$ et la deuxième composante de chrominance intermédiaire Vint ont une résolution 4K.

Dans un autre exemple, la composante de luminance Y, la première composante de chrominance U et la deuxième composante de chrominance V de l'image I ont une résolution 4K et la composante de luminance intermédiaire $Y_{int}$, la première composante de chrominance intermédiaire $U_{int}$ et la deuxième composante de chrominance intermédiaire Vint ont une résolution HD.

Dans un autre exemple encore, la composante de luminance Y, la première composante de chrominance U et la deuxième composante de chrominance V de l'image I ont pour format le format YUV444 et la composante de luminance intermédiaire $Y_{int}$, la première composante de chrominance intermédiaire $U_{int}$ et la deuxième composante de chrominance intermédiaire Vint ont pour format le format YUV420.

Puis, le processeur 4 implémente une étape SE6 lors de laquelle le module de codage 82 compresse la composante de luminance intermédiaire $Y_{int}$, la première composante de chrominance intermédiaire $U_{int}$ et la deuxième composante de chrominance Vint, afin d'obtenir une couche de base $C_{base}$. Par exemple, le module de codage peut utiliser le code VVC (Versatile Video Coding). Toute autre méthode de codage simple couche peut être utilisée.

Puis, le processeur implémente une étape SE8 lors de laquelle le module de décodage 83 décode la couche de base $C_{base}$, afin d'obtenir respectivement une composante de base de luminance $Y_{decbase}$, une première composante de base de chrominance $U_{decbase}$ et une deuxième composante de base de chrominance $V_{decbase}$.

Puis, le processeur implémente une étape SE10 lors de laquelle l'unité de suréchantillonnage 10, en utilisant les informations relatives au facteur de sous-échantillonnage, suréchantillonne la composante de base $Y_{decbase}$, la première composante de base de chrominance $U_{decbase}$ et la deuxième composante de base de chrominance $V_{decbase}$ afin de générer respectivement une composante suréchantillonnée de luminance $Y_{surech}$, une première composante suréchantillonnée de chrominance $U_{surech}$ et une deuxième composante suréchantillonnée de chrominance $V_{surech}$. L'opération de suréchantillonnage effectuée par l'unité de suréchantillonnage 10 est par exemple l'inverse de l'opération de sous-échantillonnage effectuée par le module de sous-échantillonnage 81.

Par exemple, la résolution de la composante de base luminance $Y_{decbase}$, de la première composante de base de chrominance $U_{decbase}$ et de la deuxième composante de base chrominance $V_{decbase}$ de l'image à compresser peut être une résolution 4K et la résolution de composante de luminance suréchantillonnée $Y_{surech}$, de la première composante de chrominance suréchantillonnée $U_{surech}$ et de la deuxième composante de chrominance suréchantillonnée $V_{surech}$ peut être une résolution 8K.

Dans un autre exemple, la résolution de la composante de base luminance $Y_{decbase}$, de la première composante de base de chrominance $U_{decbase}$ et de la deuxième composante de base chrominance $V_{decbase}$ de l'image à compresser peut être une résolution HD et la résolution de composante de luminance suréchantillonnée $Y_{surech}$, de la première composante de chrominance suréchantillonnée $U_{surech}$ et de la deuxième composante de chrominance suréchantillonnée $V_{surech}$ peut être une résolution 4K.

Dans un autre exemple encore, le format de la composante de base luminance $Y_{decbase}$, de la première composante de base de chrominance $U_{decbase}$ et de la deuxième composante de base chrominance $V_{decbase}$ de l'image à compresser peut être le format YUV420 et le format de composante de luminance suréchantillonnée $Y_{surech}$, de la première composante de chrominance suréchantillonnée $U_{surech}$ et de la deuxième composante de chrominance suréchantillonnée $V_{surech}$ peut être YUV444. Typiquement, une duplication des composantes de chrominance est effectuée pour effectuer le suréchantillonnage.

La composante de luminance suréchantillonnée $Y_{surech}$, la première composante de chrominance suréchantillonnée $U_{surech}$ et la deuxième composante de chrominance suréchantillonnée $V_{surech}$ constituent des données de contenu suréchantillonné Bsurech qui seront traitées par le processeur.

Puis, le processeur implémente une étape SE12 lors de laquelle l'unité de codage 6 va produire des données compressées à partir des données de contenu initial Binit et des données de contenu suréchantillonné Bsurech, comme décrit ci-dessous.

Dans la variante de codage conditionnel, utilisant la partie A de réseau de neurones de l'ensemble C entraîné selon cette variante, et comme illustré à la figure 6 , cette partie A de réseau de neurones artificiels reçoit en entrée la composante de luminance Y, la première composante de chrominance U et la deuxième composante de chrominance V de l'image I, la composante de luminance suréchantillonnée $Y_{surech}$, la première composante de chrominance suréchantillonnée $U_{surech}$ et la deuxième composante de chrominance suréchantillonnée $V_{surech}$. La partie A de réseau de neurones artificiels compresse ces données d'entrée en des données $B_{comp1}$. Puis le module de codage entropique CE, en utilisant les paramètres du modèle entropique déterminés lors de la phase d'apprentissage, compresse les données $B_{comp1}$ pour produire en sortie des données compressées C1 comprenant des informations d'amélioration $I_{am1}$.

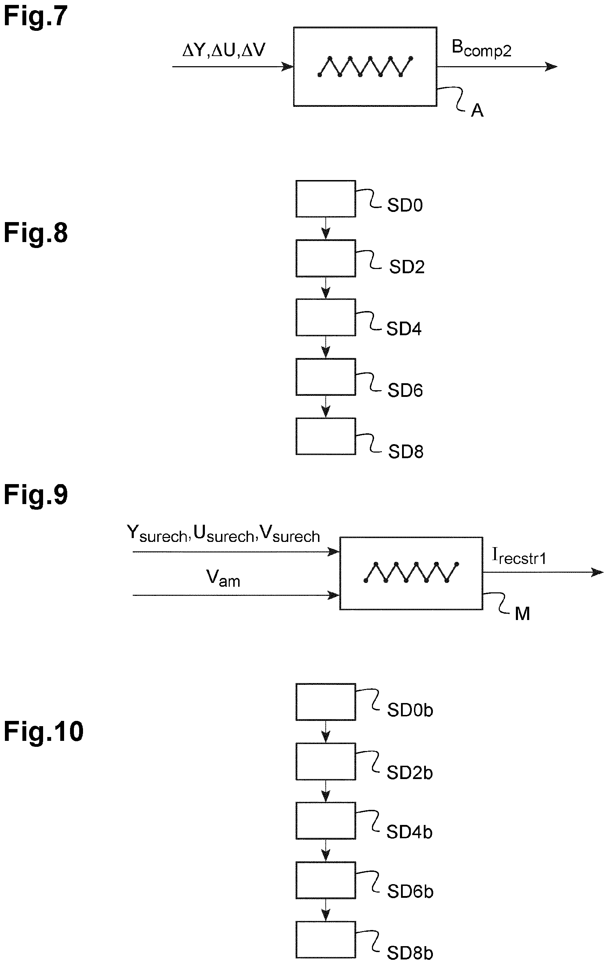

Dans la variante de codage résiduel, utilisant la partie A de réseau de neurones de l'ensemble C entraîné selon cette variante, et comme illustré à la figure 7, cette partie A de réseau de neurones reçoit en entrée la différence pixel par pixel $\Delta Y$ entre la composante de luminance Y et la composante de luminance suréchantillonnée $Y_{surech}$, la différence pixel par pixel $\Delta U$ entre la première composante de chrominance U et la première composante de chrominance suréchantillonnée $U_{surech}$, et la différence pixel par pixel $\Delta V$ entre la deuxième composante de chrominance V et la deuxième composante de chrominance suréchantillonnée $V_{surech}$. La partie A de réseau de neurones artificiels compresse ces données d'entrée en des données $B_{comp2}$. Puis le module de codage entropique CE, en utilisant les paramètres du modèle entropique déterminés lors de la phase d'apprentissage, compresse les données $B_{comp2}$ pour produire en sortie des données compressées C2 comprenant des informations d'amélioration $I_{am2}$.

Dans l'une ou l'autre de la variante de codage conditionnel ou de la variante de codage résiduel, le procédé de codage selon l'invention prépare des données $D_{enc}$ à destination d'un dispositif électronique de décodage 12 selon l'invention, comme décrit ci-dessus, comprenant :

- une couche de base $C_{base}$,
- des informations d'amélioration $I_{am1}$ dans le cas de la variante de codage conditionnel,
- le cas échéant, les poids WBc1 de l'autre partie Bc de réseau de neurones artificiels dans le cas de la variante de codage conditionnel,
- les coefficients du modèle entropique ($\omega_1^{(k)}$, $\mu_1^{(k)}$, $\sigma_1^{2(k)}$) dans le cas de la variante de codage conditionnel,
- des informations d'amélioration $I_{am2}$ dans le cas de la variante résiduelle,
- le cas échéant, les poids WBc2 de l'autre partie Bc de réseau de neurones artificiels dans le cas de la variante de codage résiduel,
- les coefficients du modèle entropique ($\omega_2^{(k)}$, $\mu_2^{(k)}$, $\sigma_2^{(k)}$) dans le cas de la variante de codage résiduel,
- les données de format P précédemment décrites, éventuellement reformatées pour pouvoir être lues par le dispositif électronique de décodage selon l'invention.

En pratique les poids WBc1 ou WBc2 ne sont pas toujours transmis dans les données $D_{enc}$. Par exemple, la phase d'apprentissage précédemment décrite peut être une phase d'apprentissage universel où les poids WBc1 ou WBc2 sont appris puis figés. Dans ce cas, les poids WBc1 ou WBc2 seront mémorisés dans la mémoire non-volatile d'un dispositif électronique de décodage 12 selon l'invention. Dans un autre exemple où les poids WBc1 ou WBc2 sont spécifiques au contenu, si un flux représentant une séquence d'images est reçu par le dispositif électronique de décodage 12 selon l'invention, les poids WBc1 ou WBc2 peuvent être reçus seulement avec les données $D_{enc}$ correspondant à la première image de la séquence d'images.

On décrit à présent en référence à la figure 8 un exemple de procédé de décodage d'une image I à partir d'une couche de base et d'informations d'amélioration, mis en oeuvre par le dispositif électronique de décodage.

L'unité de mémorisation 18 liée au processeur 16 mémorise par exemple des instructions de programme d'ordinateur conçues pour la mise en oeuvre d'une partie au moins des étapes du procédé de la figure 6 lorsque ces instructions sont exécutées par le processeur 16. Autrement dit, le processeur 16 est programmé pour mettre en oeuvre une partie au moins des étapes de la figure 6. Comme précédemment évoqué, en variante de l'utilisation du processeur 16, le procédé de décodage peut être implémenté par tout autre type de circuit intégré par exemple de type ASIC ou FPGA.

La couche de base $C_{base}$ correspond au résultat des opérations de sous-échantillonnage et de codage effectuées respectivement par exemple par le module de sous-échantillonnage 81 et le module de codage 82 du dispositif électronique de codage 2 selon l'invention, sur les trois composantes colorimétriques de l'image à décoder, par exemple la composante Y de luminance de l'image I, ainsi que la première composante de chrominance U et la deuxième composante de chrominance V de l'image I. Tout autre système de représentation colorimétrique pourrait être utilisé, tel que le système de codage RGB.

On se place dans le cas de la variante de codage conditionnel.

Le procédé commence par une étape SD0, lors de laquelle l'unité de réception 14 reçoit une couche de base $C_{base}$ constituant les données de contenu Binit, ainsi que des données de format P décrites précédemment. Les données de format P comprennent notamment les informations relatives au facteur de suréchantillonnage qui a été appliqué aux images reçues pour décodage. L'unité de réception 14 les transmet au processeur 16.

L'unité de réception 14 reçoit alors également des informations d'amélioration $I_{am1}$, les poids WBc1 de l'autre partie Bc de réseau de neurones artificiels et les coefficients du modèle entropique ($\omega_1^{(k)}$, $\mu_1^{(k)}$, $\sigma_1^{2(k)}$), qu'elle transmet au processeur 16.

Puis, le processeur implémente une étape SD2, lors de laquelle la première unité de décodage 11 reçoit du processeur 16 la couche de base $C_{base}$. La première unité de décodage 11 décode la couche de base $C_{base}$ en une composante de base de luminance $Y_{decbase}$, une première composante de base de chrominance $U_{decbase}$, et une deuxième composante de base de chrominance $V_{decbase}$. Par exemple, si la couche de base $C_{base}$ a été codée avec le module WC, tout module de décodage compatible avec cette norme peut être utilisé par la première unité de décodage 11.

Puis, le processeur 16 implémente une étape SD4, lors de laquelle l'unité de suréchantillonnage 13 reçoit respectivement de la première unité de décodage 11 la composante de base de luminance $Y_{decbase}$, la première composante de base de chrominance $U_{decbase}$, et la deuxième composante de base de chrominance $V_{decbase}$, et du processeur 16 les informations relatives au facteur de suréchantillonnage compris dans les données P. L'unité de suréchantillonnage 13 suréchantillonne la composante de base de luminance $Y_{decbase}$, la première composante de base de chrominance $U_{decbase}$, et la deuxième composante de base de chrominance $V_{decbase}$ en utilisant le facteur de suréchantillonnage, afin d'obtenir une composante de luminance suréchantillonnée $Y_{surech}$, une première composante de chrominance suréchantillonnée $U_{surech}$, et une deuxième composante de chrominance suréchantillonnée $V_{surech}$.

Par exemple, si les données P indiquent que les images initiales, c'est-à-dire avant codage, avaient une résolution 8K, l'unité de suréchantillonnage 13 suréchantillonne pour que la composante de luminance suréchantillonnée $Y_{surech}$, la première composante de chrominance suréchantillonnée $U_{surech}$, et la deuxième composante de chrominance suréchantillonnée $V_{surech}$ aient une résolution 8K.

Dans un autre exemple, si les données P indiquent que les images initiales, c'est-à-dire avant codage, avaient une résolution 4K, l'unité de suréchantillonnage 13 suréchantillonne pour que la composante de luminance suréchantillonnée $Y_{surech}$, la première composante de chrominance suréchantillonnée $U_{surech}$, et la deuxième composante de chrominance suréchantillonnée $V_{surech}$ aient une résolution 4K.

Dans un autre exemple encore, si les données P indiquent que les images initiales, c'est-à-dire avant codage, avaient pour format le format YUV444, l'unité de suréchantillonnage 13 suréchantillonne à ce format.

Puis le processeur 16 implémente une étape SD6, lors de laquelle la deuxième unité de décodage 15 reçoit du processeur 16 les informations d'amélioration $I_{am1}$, ainsi que, le cas échéant, les poids WBc1 de la partie complémentaire Bc de réseau de neurones artificiels et les coefficients du modèle entropique ($\omega_1^{(k)}$, $\mu_1^{(k)}$, $\sigma_1^{2(k)}$). En effet, les poids WBc1 peuvent avoir déjà été reçus par le dispositif électronique de décodage 12 lors de l'envoi de données $D_{enc}$ relatifs à une autre image à décoder. Alors, la deuxième unité de décodage 15 utilise les coefficients du modèle entropique ($\omega_1^{(k)}$, $\mu_1^{(k)}$, $\sigma_1^{2(k)}$) et injecte dans la partie B de réseau de neurones artificiels les poids WBc1 de la partie Bc de réseau de neurones artificiels afin de décoder les informations d'amélioration $I_{am1}$. Plus précisément, la deuxième unité de décodage 15 applique en entrée de la partie B de réseau de neurones artificiels les informations d'amélioration $I_{am1}$. Suite au décodage, des valeurs d'amélioration $V_{am1}$ sont obtenues. Les valeurs d'amélioration $V_{am1}$ comprennent trois composantes d'amélioration $Y_{compam1}$, $U_{compam1}$ et $V_{compam1}$.

Puis le processeur 16 implémente une étape SD8, lors de laquelle l'unité de reconstruction 17 reçoit, d'une part de l'unité de suréchantillonnage 13, la composante de luminance suréchantillonnée $Y_{surech}$, la première composante de chrominance suréchantillonnée $U_{surech}$, et la deuxième composante de chrominance suréchantillonnée $V_{surech}$, et d'autre part, de la deuxième unité de décodage 15, les trois composantes d'amélioration $Y_{compam1}$, $U_{compam1}$ et $V_{compam1}$.

L'unité de reconstruction 17 utilise alors, comme illustré à la figure 9, une autre partie de réseau de neurones artificiels M configurée pour reconstruire l'image à décoder. L'autre partie de réseau de neurones artificiels M reçoit en entrée d'une part la composante de luminance suréchantillonnée $Y_{surech}$, la première composante de chrominance suréchantillonnée $U_{surech}$, et la deuxième composante de chrominance suréchantillonnée $V_{surech}$, et d'autre part, les trois composantes d'amélioration $Y_{compam1}$, $U_{compam1}$ et $V_{compam1}$. L'autre partie de réseau de neurones artificiels M produit ainsi à sa sortie une image décodée reconstruite $I_{recstr1}$ dont la qualité est améliorée par rapport à l'image suréchantillonnée composée par les composantes $Y_{surech}$, $U_{surech}$ et $V_{surech}$, grâce à l'utilisation des trois composantes d'amélioration $Y_{compam1}$, $U_{compam1}$ et $V_{compam1}$.

La suite d'étapes SD0, SD2, SD4, SD6, et SD8 correspond à un exemple de procédé de décodage dans le cas de la variante de codage conditionnel.

On se place maintenant dans le cas de la variante de codage résiduel. Le procédé de décodage selon l'invention va être décrit, en référence à la figure 10, par une suite d'étapes SD0b, SD2b, SD4b, SD6b, et SD8b, où les étapes SD2b et SD4b sont identiques respectivement aux étapes SD2 et SD4.

Dans cette variante, le procédé débute lors d'une étape SD0b, où l'unité de réception 14 reçoit une couche de base $C_{base}$ constituant les données de contenu Binit, ainsi que des données de format P décrites précédemment. Les données de format P comprennent notamment les informations relatives au facteur de sous-échantillonnage qui a été appliqué aux images reçues pour décodage. L'unité de réception 14 les transmet au processeur 16.

L'unité de réception 14 reçoit alors également des informations d'amélioration $I_{am2}$, et le cas échéant, les poids WBc2 de la partie complémentaire Bc de réseau de neurones artificiels et les coefficients du modèle entropique ($\omega_2^{(k)}$, $\mu_2^{(k)}$, $\sigma_2^{2(k)}$), qu'elle transmet au processeur. En effet, de même que pour la variante de codage conditionnel, les poids WBc2 peuvent avoir déjà été reçus par le dispositif électronique de décodage 12 lors de l'envoi de données $D_{enc}$ relatives à une autre image à décoder.

Puis le processeur 16 implémente une étape SD2b identique à l'étape SD2 précédemment décrite, où sont obtenues une composante de base de luminance $Y_{decbase}$, une première composante de base de chrominance $U_{decbase}$, et une deuxième composante de base de chrominance $V_{decbase}$ par décodage de la couche de base $C_{base}$.

Puis le processeur 16 implémente une étape SD4b identique à l'étape SD4 précédemment décrite, où sont obtenues une composante de luminance suréchantillonnée $Y_{surech}$, une première composante de chrominance suréchantillonnée $U_{surech}$, et une deuxième composante de chrominance suréchantillonnée $V_{surech}$.

Puis, le processeur implémente une étape SD6b, lors de laquelle la deuxième unité de décodage 15 reçoit du processeur 16 les informations d'amélioration $I_{am2}$, ainsi que les poids WBc2 de la partie complémentaire Bc de réseau de neurones artificiels et les coefficients du modèle entropique ($\omega_2^{(k)}$, $\mu_2^{(k)}$, $\sigma_2^{2(k)}$). Alors, la deuxième unité de décodage 15 utilise les coefficients du modèle entropique ($\omega_2^{(k)}$, $\mu_2^{(k)}$, $\sigma_2^{(k)}$) et injecte dans la partie B de réseau de neurones artificiels les poids WBc2 de l'autre partie Bc de réseau de neurones artificiels afin décoder les informations d'amélioration $I_{am2}$. Plus précisément, la deuxième unité de décodage applique en entrée de la partie B de réseau de neurones artificiels les informations d'amélioration $I_{am2}$. Suite au décodage, des valeurs d'amélioration $V_{am2}$ sont obtenues. Les valeurs d'amélioration $V_{am2}$ consistent en trois composantes d'amélioration $Y_{compam2}$, $U_{compam2}$ et $V_{compam2}$.

Puis le processeur implémente une étape SD8b, lors de laquelle l'unité de reconstruction 17 reçoit, d'une part de l'unité de suréchantillonnage 13, la composante de luminance suréchantillonnée $Y_{surech}$, la première composante de chrominance suréchantillonnée $U_{surech}$, et la deuxième composante de chrominance suréchantillonnée $V_{surech}$, et d'autre part, de la deuxième unité de décodage 15, les trois composantes d'amélioration $Y_{compam2}$, $U_{compam2}$ et $V_{compam2}$.

L'unité de reconstruction 17 effectue alors la somme pixel à pixel de la composante de luminance suréchantillonnée $Y_{surech}$ et de la composante d'amélioration $Y_{compam2}$, l'addition pixel par pixel de la première composante de chrominance suréchantillonnée $U_{surech}$ et de la composante d'amélioration $U_{compam2}$, et l'addition pixel par pixel de la deuxième composante de chrominance suréchantillonnée $V_{surech}$ et de la composante d'amélioration $V_{compam2}$.

Chaque composante étant une matrice de pixels, on entend par somme pixel à pixel entre deux composantes la matrice constituée de pixels dont la valeur est égale à la somme des valeurs des pixels correspondants dans chacune des deux composantes. Cette somme peut être une somme pondérée des valeurs des pixels correspondants dans chacune des deux composantes. Ici, il s'agit d'une addition pixel à pixel, c'est-à-dire une addition des valeurs des pixels correspondants dans chacune des deux composantes.

L'unité de reconstruction reconstruit donc une image décodée reconstruite $I_{recstr2}$ dont la qualité est améliorée par rapport à l'image suréchantillonnée composée par les composantes $Y_{surech}$, $U_{surech}$ et $V_{surech}$, grâce à l'utilisation des trois composantes d'amélioration $Y_{compam2}$, $U_{compam2}$ et $V_{compam2}$.

Les exemples de procédé de codage et de procédé de décodage précédents ont été décrits dans le cas où les trois composantes de l'image à coder et à décoder étaient les composantes colorimétriques de luminance Y et de chrominances U et V. Le procédé de codage et le procédé de codage selon l'invention peuvent être appliqués dans tout autre système de représentation colorimétrique, tel que l'espace RGB.

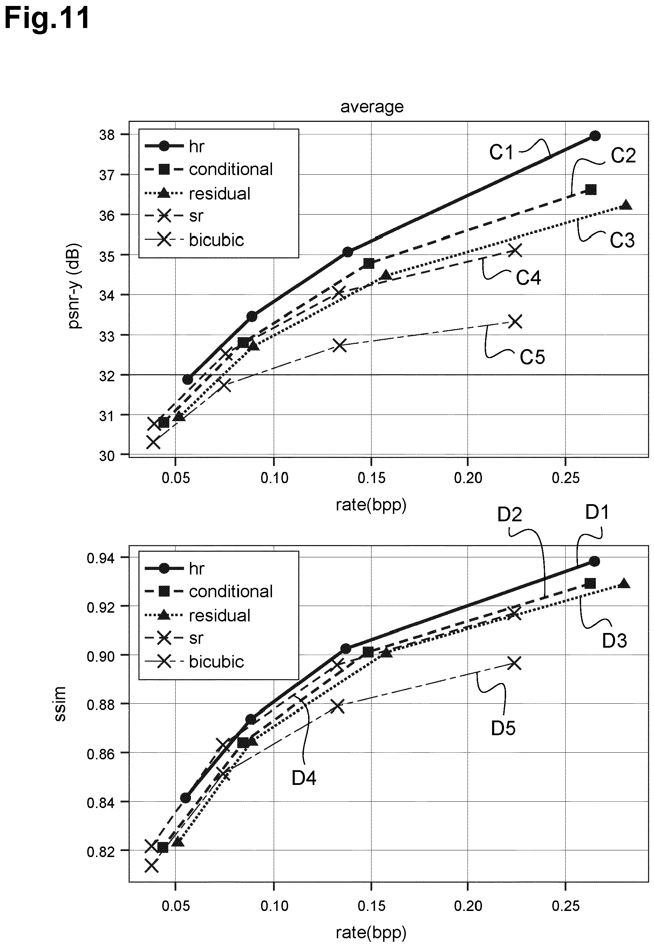

La figure 11 présente une comparaison des performances de codage selon les métriques de PSNR («Peak Signal to Noise Ratio ») et de SSIM (« Structural SIMilarity ») obtenues selon plusieurs techniques de codage sur la base de la banque d'images CLIC (« Challenge on Learned Image Compression »).

Les courbes C1 et D1 représentent les valeurs de ces métriques obtenues avec une technique de codage classique sans étape d'adaptation spatiale de résolution. Les courbes C2 et D2 représentent les valeurs de ces métriques obtenues avec la technique de codage conditionnel selon l'invention. Les courbes C3 et D3 représentent les valeurs de ces métriques obtenues avec la technique de codage résiduel selon l'invention. Les courbes C4 et D4 représentent les valeurs de ces métriques obtenues avec l'association d'une technique de super-résolution et d'une étape d'adaptation spatiale de résolution. Les courbes C5 et D5 représentent les valeurs de ces métriques obtenues avec l'association d'une technique d'interpolation bicubique et d'une étape d'adaptation spatiale de résolution.

Il peut être observé que la technique de codage conditionnel selon l'invention fournit de meilleurs résultats que l'association d'une technique de super-résolution et d'une étape d'adaptation spatiale de résolution en termes de qualité d'image.

Dans un mode de réalisation, le procédé de codage et le procédé de décodage selon l'invention peuvent être implémentés à partir d'une unique composante d'une image, spécifiquement, la composante de luminance Y, dans le cas où on se place dans l'espace colorimétrique YUV. Ce mode de réalisation est un mode simplifié exploitant le fait que l'œil est plus sensible à la luminance qu'à la chrominance. Ainsi, dans certains cas, améliorer la composante de luminance Y tout en conservant des composantes de chrominance moins optimisées peut créer un effet visuel suffisant.

Dans ce cas, lors de la phase d'apprentissage de l'ensemble C, pour une image d'entraînement $I_e^{HR}$, seule la composante de luminance Y est utilisée lors de l'entraînement de l'ensemble C.

On décrit dans la suite deux variantes possibles, qui seront appelées variante de codage conditionnel à une composante, et variante de codage résiduel à une composante.

Plus précisément, dans la variante de codage conditionnel à une composante, la partie A de réseau de neurones reçoit en entrée la composante de luminance $Y_e^{HR0}$ de l'image d'entraînement originale $I_e^{HRo}$ et la composante de luminance $Y_e^{HRs}$ de l'image de base suréchantillonnée $I_e^{HRs}$ correspondante, c'est-à-dire au total 2 signaux.

Dans la variante de codage résiduel à une composante, la différence pixel à pixel $\Delta Y_e^{HR}$ entre la composante de luminance $Y_e^{HRo}$ et la composante de luminance $Y_e^{HRs}$ est calculée et est le seul signal reçu en entrée de la partie A de réseau de neurones.

Dans l'une ou l'autre de la variante de codage conditionnel à une composante et de la variante de codage résiduel à une composante, un algorithme de rétropropagation du gradient est ensuite implémenté afin de minimiser, pour chaque couple d'images CI $(I_e^{HRo}, I_e^{HRs})$, la même fonction de coût que dans le mode de réalisation où les trois composantes de l'image d'entraînement $I_e^{HR}$ sont utilisées :

$$L = R + \lambda D\left(Y_e^{HRo}, \hat{Y}_e^{HR}\right)$$

où

- D représente la distorsion entre la composante de luminance $Y_e^{HR0}$ de l'image d'entraînement originale $I_e^{HRo}$ et une composante de luminance $\hat{Y}_e^{HR}$ prédite calculée en fonction de la composante de luminance $Y_e^{HR0}$ de l'image d'entraînement originale $I_e^{HRo}$ et la composante de luminance $Y_e^{HRs}$ de l'image de base suréchantillonnée $I_e^{HRs}$. La distorsion D correspond par exemple à l'erreur quadratique moyenne entre les valeurs de pixels la composante

de luminance $Y_e^{HR0}$ courante $Y_e^{HRo}$ et les valeurs de pixels de composante de luminance prédite $\widehat{Y}_e^{HR}$ .

A la fin de la phase d'apprentissage, les paramètres suivants sont obtenus :

- les poids WA11 de la partie A de réseau de neurones artificiels dans le cas de la variante de codage conditionnel à une composante,
- les poids WBc11 de la partie complémentaire Bc de réseau de neurones artificiels dans le cas de la variante de codage conditionnel à une composante,
- les coefficients du modèle entropique ($\omega_{11}^{(k)}$, $\mu_{11}^{(k)}$, $\sigma_{11}^{2(k)}$) dans le cas de la variante de codage conditionnel à une composante,
- les poids WA21 de la partie A de réseau de neurones artificiels dans le cas de la variante de codage résiduel à une composante,
- les poids WBc21 de la partie complémentaire Bc de réseau de neurones artificiels dans le cas de la variante de codage résiduel à une composante,
- les coefficients du modèle entropique ($\omega_{21}^{(k)}$, $\mu_{21}^{(k)}$, $\sigma_{21}^{2(k)}$) dans le cas de la variante de codage résiduel à une composante.

On décrit à présent un exemple de procédé de codage d'une image I à partir de la composante de luminance Y de l'image courante I, mis en oeuvre par le dispositif électronique de codage 2, et dans le cas de la variante de codage conditionnel à une composante.

Le procédé commence par les mêmes étapes SE0, SE2, SE4, SE6, SE8 et S10 que le procédé de codage décrit précédemment pour la variante de codage conditionnel. On pourra se référer à leur description présentée plus haut.

Puis, lors d'une d'étape SE121, l'unité de codage va produire des informations d'amélioration à partir uniquement de la composante Y de luminance de l'image courante I et de la composante suréchantillonnée de luminance $Y_{surech}$, comme décrit ci-dessous.

La partie A de réseau de neurones de l'ensemble C entraîné selon la variante de codage conditionnel à une composante reçoit en entrée la composante de luminance Y et la composante de luminance suréchantillonnée $Y_{surech}$. La partie A de réseau de neurones compresse ces données d'entrée en des données $B_{comp11}$. Puis le module de codage entropique CE, en utilisant les paramètres du modèle entropique déterminés lors de la phase d'apprentissage, compresse les données $B_{comp11}$ pour produire en sortie des données compressées C11 comprenant des informations d'amélioration $I_{am11}$.

Le procédé de codage d'une image I à partir de la composante de luminance $Y^{HR}$ de l'image courante $I^{HR}$ selon l'invention prépare des données $D_{enc}$ à destination d'un dispositif électronique de décodage 12 selon l'invention, comme décrit ci-dessus, comprenant, dans le cas de la variante de codage conditionnel à une composante :

- des informations d'amélioration $I_{am11}$ ;
- le cas échéant, les poids WBc11 de la partie complémentaire Bc de réseau de neurones artificiels,
- les coefficients du modèle entropique ($\omega_{11}^{(k)}$, $\mu_{11}^{(k)}$, $\sigma_{11}^{2(k)}$).

En pratique, les poids WBc11 ne sont pas toujours transmis dans les données $D_{enc}$. Par exemple, comme précédemment, la phase d'apprentissage dans le cas de la variante de codage conditionnel à une composante peut être une phase d'apprentissage universelle, où des poids WBc11 figés sont obtenus. Les poids WBc11 sont alors par exemple mémorisés dans une mémoire non volatile du dispositif électronique de décodage 12 selon l'invention. Dans un autre exemple, où les poids WBc11 dépendent du contenu à compresser, si un flux représentant une séquence d'images est reçu par le dispositif électronique de décodage 12 selon l'invention, les poids WBc11 peuvent être reçus avec les données $D_{enc}$ correspondant à la première image de la séquence d'images.

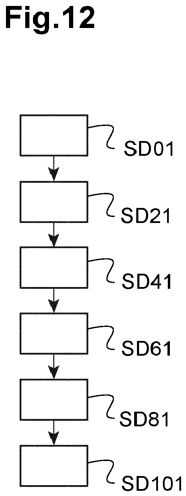

On décrit à présent en référence à la figure 12 un exemple de procédé de décodage d'une image courante $I^{HR}$, mis en oeuvre par le dispositif électronique de décodage 12, l'image I ayant été codée suivant le procédé de codage à partir de la composante de luminance Y de l'image I précédemment décrit, dans le cas de la variante de codage conditionnel à une composante.

Le procédé de décodage va être décrit par une suite d'étapes SD01, SD21, SD41, SD61, et SD81, où les étapes SD21 et SD41 sont identiques respectivement aux étapes SD2 et SD4.

Lors d'une étape SD01, l'unité de réception 14 reçoit une couche de base de luminance $Y_{base}$, une première couche de base de chrominance $U_{base}$ et une deuxième couche de base de chrominance $V_{base}$ constituant les données de contenu Binit, ainsi que des données de format P décrites précédemment. Les données de format P comprennent notamment les informations relatives au facteur de sous-échantillonnage qui a été appliqué aux images reçues pour décodage. L'unité de réception 14 les transmet au processeur 16.

L'unité de réception 14 reçoit alors également des informations d'amélioration $I_{am11}$ ; le cas échéant, les poids WBc11 de la partie complémentaire Bc de réseau de neurones artificiels ; les coefficients du modèle entropique ($\omega_{11}^{(k)}$, $\mu_{11}^{(k)}$, $\sigma_{11}^{2(k)}$), qu'elle transmet au processeur. En effet, les poids WBc11 peuvent avoir déjà été fixés à l'avance ou reçus par le dispositif électronique de décodage 12 lors de l'envoi de données $D_{enc}$ relatifs à une autre image à décoder.

Puis le processeur 16 implémente une étape SD21 identique à l'étape SD2 précédemment décrite, où sont obtenues une composante de base de luminance $Y_{decbase}$, une première composante de base de chrominance $U_{decbase}$, et une deuxième composante de base de chrominance $V_{decbase}$ par décodage de la couche de base de luminance $Y_{base}$, de la première couche de base de chrominance $U_{base}$ et de la deuxième couche de base de chrominance $V_{base}$.

Puis le processeur 16 implémente une étape SD41 identique à l'étape SD4 précédemment décrite, où sont obtenues une composante de luminance suréchantillonnée $Y_{surech}$, une première composante de chrominance suréchantillonnée $U_{surech}$, et une deuxième composante de chrominance suréchantillonnée $V_{surech}$.

Puis le processeur implémente une étape SD61, lors de laquelle la deuxième unité de décodage 15 reçoit du processeur les informations d'amélioration $I_{am11}$, ainsi que, le cas échéant, les poids WBc11 de la partie complémentaire Bc de réseau de neurones artificiels et les coefficients du modèle entropique ($\omega_{11}^{(k)}$, $\mu_{11}^{(k)}$, $\sigma_{11}^{2(k)}$). Alors, la deuxième unité de décodage 15 utilise les coefficients du modèle entropique ($\omega_{11}^{(k)}$, $\mu_1 1^{(k)}$, $\sigma_{11}^{2(k)}$) et injecte dans la partie B de réseau de neurones artificiels les poids WBc11 de la partie complémentaire Bc de réseau de neurones artificiels pour décoder les informations d'amélioration $I_{am11}$. Plus précisément, la deuxième unité de décodage 15 applique en entrée de la partie B de réseau de neurones artificiels les informations d'amélioration $I_{am11}$. Suite au décodage, des valeurs d'amélioration $V_{am11}$ sont obtenues. Les valeurs d'amélioration $V_{am11}$ comprennent une composante de luminance d'amélioration $Y_{compam11}$.

Puis, le processeur implémente une étape SD81, lors de laquelle l'unité de reconstruction 15 reçoit, d'une part de l'unité de suréchantillonnage 13, la composante de luminance suréchantillonnée $Y_{surech}$, et d'autre part, de la deuxième unité de décodage 15, la composante de luminance d'amélioration $Y_{compam11}$. L'unité de reconstruction 15 utilise alors une partie ultérieure de réseau de neurones M1 pour obtenir une composante de luminance reconstruite $Y_{recstr1}$ en appliquant en entrée de la partie ultérieure de réseau de neurones M1, d'une part, la composante de luminance suréchantillonnée $Y_{surech}$, et d'autre part, la composante de luminance d'amélioration $Y_{compam11}$. La partie ultérieure de réseau de neurones M1 produit ainsi à sa sortie la composante de luminance reconstruite $Y_{recstr1}$, dont la qualité est améliorée par rapport à la composante de luminance suréchantillonnée $Y_{surech}$, grâce à l'utilisation la composante de luminance d'amélioration $Y_{compam11}$.

Puis, le processeur implémente une étape SD101, lors de laquelle l'unité de reconstruction 15 reçoit de l'unité de suréchantillonnage 13 la première composante de chrominance suréchantillonnée $U_{surech}$, et la deuxième composante de chrominance suréchantillonnée $V_{surech}$ obtenues à l'étape SD41. L'unité de reconstruction 15 reconstruit une image décodée reconstruite $I_{recstr11}$ par concaténation de la composante de luminance reconstruite $Y_{recstr1}$, de la première composante de chrominance suréchantillonnée $U_{surech}$, et la deuxième composante de chrominance suréchantillonnée $V_{surech}$. La qualité de l'image décodée reconstruite $Y_{recstr1}$ est améliorée du fait de la qualité améliorée de la composante de luminance reconstruite $Y_{recstr1}$.

Comme indiqué précédemment, l'invention peut s'appliquer à toute image faisant partie d'une séquence d'images et donc à un flux vidéo, dans le cadre notamment d'un codage intra-trame.

L'invention peut s'appliquer à tout facteur de sous-échantillonnage d'une étape d'adaptation spatiale de résolution sur des images à coder et à décoder défini préalablement. Le facteur de sous-échantillonnage sera inclus dans les données de format P.

Ainsi, l'invention permet d'améliorer la qualité d'images traitées par une technique d'adaptation spatiale de résolution.

## Revendications

1. Procédé de décodage d'une image à partir d'une couche de base ($C_{base}$) et d'informations d'amélioration ($I_{am}$), ledit procédé comprenant les étapes suivantes :

- décodage de ladite une couche de base ($C_{base}$) afin d'obtenir au moins une composante de base ($Y_{decbase}$, $U_{decbase}$, $V_{decbase}$),
- suréchantillonnage de la au moins une composante de base ($Y_{decbase}$, $U_{decbase}$, $V_{decbase}$) afin d'obtenir au moins une composante suréchantillonnée ($Y_{surech}$, $U_{surech}$, $V_{surech}$),
- décodage des informations d'amélioration ($I_{am}$) au moyen d'une partie au moins de réseau de neurones artificiels (B) afin d'obtenir des valeurs d'amélioration ($V_{am}$),
- reconstruction de l'image à partir de la au moins une composante suréchantillonnée ($Y_{surech}$, $U_{surech}$, $V_{surech}$)

et des valeurs d'amélioration ($V_{am}$).

**2.** Procédé de décodage selon la revendication 1, dans lequel l'étape de reconstruction de l'image comprend une application de la au moins une composante suréchantillonnée ($Y_{surech}$, $U_{surech}$, $V_{surech}$) et des valeurs d'amélioration (Vam) à une autre partie de réseau de neurones artificiels (M).

**3.** Procédé de décodage selon la revendication 1, dans lequel l'étape de reconstruction de l'image comprend au moins une somme pixel à pixel entre la au moins une composante suréchantillonnée et au moins un sous-ensemble des valeurs d'amélioration ($V_{am}$).

**4.** Procédé de décodage selon l'une des revendications 1 à 3, comprenant une étape d'obtention de paramètres représentatifs d'un modèle entropique, et dans lequel le décodage des informations d'amélioration comprend :

- une première étape de décodage entropique utilisant les paramètres représentatifs du modèle entropique,
- une deuxième étape de décodage au moyen de la partie de réseau de neurones artificiels (B).

**5.** Procédé de décodage selon la revendication 4, dans lequel les paramètres représentatifs du modèle entropique sont obtenus au moyen d'une partie supplémentaire de réseau de neurones artificiels.

**6.** Procédé de codage d'une image à partir d'au moins une composante de ladite image (Y, U, V), ledit procédé comprenant les étapes suivantes :

- obtention d'au moins une composante de base ($Y_{decbase}$, $U_{decbase}$, $V_{decbase}$) à partir de la au moins une composante de ladite image au moyen d'un processus de codage,
- suréchantillonnage de la au moins une composante de base afin d'obtenir au moins une composante suréchantillonnée ($Y_{surech}$, $U_{surech}$, $V_{surech}$),
- obtention d'informations d'amélioration ($I_{am}$) par codage au moyen d'une partie au moins de réseau de neurones artificiels (A) et à partir de la au moins une composante de l'image (Y, U, V) et de la au moins une composante suréchantillonnée ($Y_{surech}$, $U_{surech}$, $V_{surech}$).

**7.** Procédé de codage d'une image selon la revendication 6, dans lequel l'étape d'obtention de la au moins une composante de base comprend les sous-étapes suivantes :

- sous-échantillonnage de la au moins une composante de ladite image (Y, U, V) afin d'obtenir au moins une composante intermédiaire ($Y_{int}$, $U_{int}$, $V_{int}$),
- codage de la au moins une composante intermédiaire ($Y_{int}$, $U_{int}$, $V_{int}$) afin d'obtenirune couche de base ($C_{base}$),
- décodage de la une couche de base $C_{base}$ afin d'obtenir la au moins une composante de base ($Y_{decbase}$, $U_{decbase}$, $V_{decbase}$).

**8.** Procédé de codage selon la revendication 6 ou 7, dans lequel la partie au moins de réseau de neurones artificiels (A) reçoit, d'une part, la au moins une composante suréchantillonnée ($Y_{surech}$, $U_{surech}$, $V_{surech}$) et, d'autre part, la au moins une composante de l'image (Y, U, V).

**9.** Procédé de codage selon la revendication 6 ou 7, comprenant, avant l'étape d'obtention d'informations d'amélioration, au moins une différence pixel à pixel entre la au moins une composante de l'image (Y, U, V) et la au moins une composante suréchantillonnée ($Y_{surech}$, $U_{surech}$, $V_{surech}$).

**10.** Dispositif de décodage d'une image à partir d'une couche de base ($C_{base}$) et d'informations d'amélioration ($I_{am}$) comprenant :

- une première unité de décodage (11) conçue pour obtenir au moins une composante de base (Ydecbase, $U_{decbase}$, $V_{decbase}$) par décodage de la couche de base ($C_{base}$) ,
- une unité de suréchantillonnage (13) conçue pour obtenir au moins une composante suréchantillonnée ($Y_{surech}$, $U_{surech}$, $V_{surech}$) par suréchantillonnage de la au moins une composante de base (Ydecbase, $U_{decbase}$, Vdecbase),
- une deuxième unité de décodage (15) conçue pour obtenir des valeurs d'amélioration ($V_{am}$) par décodage des informations d'amélioration ($I_{am}$) au moyen d'une partie au moins de réseau de neurones artificiels (B),
- une unité de reconstruction (17) conçue pour reconstruire ladite image à partir de la au moins une composante suréchantillonnée ($Y_{surech}$, $U_{surech}$, $V_{surech}$) et des valeurs d'amélioration ($V_{am}$).

**11.** Dispositif de décodage selon la revendication 10 dans lequel l'unité de reconstruction (17) est conçue pour reconstruire ladite image par application de la au moins une composante suréchantillonnée ($Y_{surech}$, $U_{surech}$, $V_{surech}$) et des valeurs d'amélioration (Vam) à une autre partie de réseau de neurones artificiels (M).

**12.** Dispositif de décodage selon la revendication 10 dans lequel l'unité de reconstruction (17) est conçue pour reconstruire ladite image à partir d'au moins une somme pixel à pixel entre la au moins une composante suréchantillonnée ($Y_{surech}$, $U_{surech}$, $V_{surech}$) et au moins un sous-ensemble des valeurs d'amélioration.

**13.** Dispositif de codage d'une image à partir d'au moins une composante de l'image (Y, U, V) comprenant :

- une unité d'obtention (8) d'au moins une composante de base ($Y_{decbase}$, $U_{decbase}$, $V_{decbase}$) à partir de la au moins une composante de l'image (Y, U, V),
- une unité de suréchantillonnage (10) conçue pour obtenir au moins une composante suréchantillonnée ($Y_{surech}$, $U_{surech}$, $V_{surech}$) par suréchantillonnage de la au moins une composante de base ($Y_{decbase}$, $U_{decbase}$, $V_{decbase}$),
- une unité de codage (6) conçue pour obtenir des informations d'amélioration ($I_{am}$) par codage au moyen d'une partie au moins de réseau de neurones artificiels (A) à partir de la au moins une composante de l'image (Y, U, V) et de la au moins une composante suréchantillonnée ($Y_{surech}$, $U_{surech}$, $V_{surech}$).

**14.** Dispositif de codage selon la revendication 11 dans lequel l'unité d'obtention (8) comprend :

- un module de sous-échantillonnage (81) conçu pour sous-échantillonner la au moins une composante de l'image (Y, U, V), afin d'obtenir au moins une composante intermédiaire ($Y_{int}$, $U_{int}$, $V_{int}$),
- un module de codage (82) conçu pour coder la au moins une composante intermédiaire ($Y_{int}$, $U_{int}$, $V_{int}$), afin d'obtenir une couche de base ($C_{base}$),
- un module de décodage conçu pour décoder ladite couche de base, afin d'obtenir ladite au moins une composante de base $Y_{decbase}$, $U_{decbase}$, $V_{decbase}$).

**15.** Signal représentatif d'au moins une composante d'une image (Y, U, V), comprenant une couche de base ($C_{base}$) et des informations d'amélioration ($I_{am}$), lesdites informations d'amélioration ($I_{am}$) étant obtenues à partir de la au moins une composante de l'image (Y, U, V) et d'au moins une composante suréchantillonnée ($Y_{surech}$, $U_{surech}$, $V_{surech}$).

**Fig.1**

**Fig.2**

EP 4 109 900 A1

# Fig.3

# Fig.4

# Fig.5

```
┌──────┐
│      │ ⌐ SE0
└──────┘
   │
   ▼
┌──────┐
│      │ ⌐ SE2
└──────┘
   │
   ▼
┌──────┐
│      │ ⌐ SE4
└──────┘
   │
   ▼
┌──────┐
│      │ ⌐ SE6
└──────┘
   │
   ▼
┌──────┐
│      │ ⌐ SE8
└──────┘
   │
   ▼
┌──────┐
│      │ ⌐ SE10
└──────┘
   │
   ▼
┌──────┐
│      │ ⌐ SE12
└──────┘
```

# Fig.6

$Y, U, V$

$Y_{surech}, U_{surech}, V_{surech}$

$B_{comp1}$

$A$

**Fig.7**

$\Delta Y, \Delta U, \Delta V \longrightarrow$ [box] $\longrightarrow B_{comp2}$

$A$

**Fig.8**

SD0 → SD2 → SD4 → SD6 → SD8

**Fig.9**

$Y_{surech}, U_{surech}, V_{surech} \longrightarrow$
$V_{am} \longrightarrow$ [box] $\longrightarrow I_{recstr1}$

$M$

**Fig.10**

SD0b → SD2b → SD4b → SD6b → SD8b

# Fig.11

# Fig.12

SD01

SD21

SD41

SD61

SD81

SD101

Europäisches
Patentamt

European
Patent Office

Office européen
des brevets

## RAPPORT DE RECHERCHE EUROPEENNE

Numéro de la demande

**EP 22 18 0078**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2020/188273 A1 (V NOVA INT LTD [GB]) 24 septembre 2020 (2020-09-24) * page 22, ligne 1 - ligne 30 * * page 107, ligne 22 - page 116, ligne 17 * * page 130, ligne 11 - ligne 28 * * page 188, ligne 7 - page 190, ligne 20 * ----- | 1-15 | INV. H04N19/33 H04N19/59 |
| X | US 2020/311870 A1 (JUNG JU HYUN [KR] ET AL) 1 octobre 2020 (2020-10-01) * alinéa [0038] - alinéa [0077] * ----- | 1,2,6, 10,13,15 | |
| A | US 2020/027247 A1 (MINNEN DAVID CHARLES [US] ET AL) 23 janvier 2020 (2020-01-23) * alinéa [0074]; figure 2 * ----- | 7 | |

**DOMAINES TECHNIQUES RECHERCHES (IPC)**

**H04N**

Le présent rapport a été établi pour toutes les revendications

| Lieu de la recherche | Date d'achèvement de la recherche | Examinateur |
|---|---|---|
| **Munich** | **21 octobre 2022** | **Vaquero, Raquel** |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons
.........................................................................
& : membre de la même famille, document correspondant

EPO FORM 1503 03.82 (P04C02)

**ANNEXE AU RAPPORT DE RECHERCHE EUROPEENNE
RELATIF A LA DEMANDE DE BREVET EUROPEEN NO.**

EP 22 18 0078

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

21-10-2022

| Document brevet cité au rapport de recherche | Date de publication | Membre(s) de la famille de brevet(s) | Date de publication |
|---|---|---|---|
| WO 2020188273 A1 | 24-09-2020 | AU 2020243405 A1 | 14-10-2021 |
| | | CA 3133887 A1 | 24-09-2020 |
| | | CN 114467304 A | 10-05-2022 |
| | | CN 114503573 A | 13-05-2022 |
| | | EP 3942813 A1 | 26-01-2022 |
| | | EP 3942817 A1 | 26-01-2022 |
| | | GB 2599507 A | 06-04-2022 |
| | | GB 2599805 A | 13-04-2022 |
| | | KR 20220003511 A | 10-01-2022 |
| | | US 2022159311 A1 | 19-05-2022 |
| | | WO 2020188271 A1 | 24-09-2020 |
| | | WO 2020188273 A1 | 24-09-2020 |
| US 2020311870 A1 | 01-10-2020 | KR 20200114436 A | 07-10-2020 |
| | | US 2020311870 A1 | 01-10-2020 |
| US 2020027247 A1 | 23-01-2020 | CN 111868753 A | 30-10-2020 |
| | | EP 3756143 A1 | 30-12-2020 |
| | | US 2020027247 A1 | 23-01-2020 |
| | | US 2022138991 A1 | 05-05-2022 |
| | | WO 2020018985 A1 | 23-01-2020 |

EPO FORM P0460

Pour tout renseignement concernant cette annexe : voir Journal Officiel de l'Office européen des brevets, No.12/82

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Littérature non-brevet citée dans la description**

- **LEE, W. C. ; CHANG, C. P. ; PENG, W. H. ; HANG, H. M.** A Hybrid Layered Image Compressor with Deep-Learning Technique. *IEEE 22nd International Workshop on Multimedia Signal Processing (MMSP),* 2020, 1-6
- **DUCHON, C.E.** Lanczos filtering in one and two dimensions. *Journal of Applied Meteorology and Climatology,* 1979, vol. 18 (8), 1016-1022
- **LIM, B. et al.** Enhanced deep residual networks for single image super-resolution. *Proceedings of the IEEE conference on computer vision and pattern recognition workshops,* 2017, 136-144
- **MINNEN et al.** Joint Autoregressive and Hierarchical Priors for Learned Image Compression. *NIPS'18: Proceedings of the 32nd International Conference on Neural Information Processing Systems,* Décembre 2018, 10794-10803
- **DE DUCHON, C.E.** Lanczos filtering in one and two dimensions. *Journal of Applied Meteorology and Climatology,* 1979, vol. 18 (8), 1016-1022
- **DE LIM, B. et al.** Enhanced deep residual networks for single image super-resolution. *Proceedings of the IEEE conference on computer vision and pattern recognition workshops,* 2017, 136-144
- Large-scale machine learning with stochastic gradient descent. **DE L. BOTTOU.** Proceedings of COMPSTAT'2010. Springer, 2010, 177-186